# EUROPÄISCHE PATENTSCHRIFT

(11) **EP 2 059 986 B1**
(45) Veröffentlichungstag und Bekanntmachung des Hinweises auf die Patenterteilung: **26.08.2015**
(21) Anmeldenummer: 06791357.4
(22) Anmeldetag: 06.09.2006
(51) Int. Cl.: H02H 7/085

(54) **SCHUTZSCHALTUNG ZUM SCHUTZ EINES GERÄTS, INSBESONDERE EINES ELEKTROMOTORS, VOR EINER THERMISCHEN ÜBERLASTUNG**
PROTECTIVE CIRCUIT FOR PROTECTION OF AN APPLIANCE, IN PARTICULAR AN ELECTRIC MOTOR, AGAINST THERMAL OVERLOADING
CIRCUIT DE PROTECTION POUR PROTEGER UN APPAREIL, NOTAMMENT UN MOTEUR ELECTRIQUE, CONTRE UNE SURCHARGE THERMIQUE

(43) Veröffentlichungstag der Anmeldung: 20.05.2009
(73) Patentinhaber: Siemens Aktiengesellschaft, 80333 München (DE)
(72) Erfinder: FRITSCH, Andreas, 92245 Kümmersbruck (DE); KOLLER, Josef, 93133 Burglengenfeld (DE); MEIER, Markus, 92286 Rieden (DE); SEITZ, Johann, 92224 Amberg (DE); SPINDLER, Konrad, 92289 Ursensollen (DE)
(86) Internationale Anmeldenummer: PCT/DE2006/001558
(87) Internationale Veröffentlichungsnummer: WO 2008/028431

(56) Entgegenhaltungen:
- WO-A-2005/122354

## Beschreibung

Die Erfindung betrifft eine Schutzschaltung zum Schützen eines Geräts, insbesondere eines Elektromotors, vor einer thermischen Überlastung.

Zum Schutz vor thermischer Motorüberlastung werden neben einem Überlastrelais, das anhand der Motorstromaufnahme eine Überlastung des Motors erkennt, auch Thermistorschutzschaltungen verwendet, die die Temperatur einer Motorwicklung detektieren und auswerten. Dabei kommen verschiedene Temperaturdetektorelemente zum Einsatz, wie z. B. Temperaturfühler, insbesondere PTC-Thermistoren (PTC: positive temperature coefficient), PT100-Fühler und KTY-Fühler, deren elektrischer Widerstand sich abhängig von der detektierten Temperatur ändert. Insbesondere liegt der Widerstand eines solchen Temperaturdetektorelementes in einem ersten Bereich, so lange sich die Motorwicklung in einem Temperaturbereich befindet, der unproblematisch ist. Der zweite Widerstandsbereich, dessen Widerstandswerte beispielsweise größer sind als die des ersten Widerstandsbereichs, entspricht dann einer Temperatur über einem Temperaturschwellwert.

Weiterhin können als Temperaturdetektorelemente auch so genannte Thermo-Click-Elemente, die auch als Temperaturwächter bezeichnet werden, verwendet werden. Diese stellen in der Regel einfache Schalter dar, die üblicherweise mit Hilfe eines Bimetalls ausgebildet sind, der in dem ersten Temperaturbereich geschlossen ist und sich in einem zweiten Temperaturbereich, d.h. über dem Temperaturschwellwert, öffnet. D. h. der Widerstand wechselt von nahezu 0 Ω zu einem unendlichen Widerstand.

Bei den erstgenannten Temperaturdetektorelementen, den Temperaturfühlern, wird die Überlast des Motors durch die Widerstandsänderung der Temperaturdetektorelemente innerhalb vordefinierter Wertebereiche ausgewertet. Dagegen öffnet das Thermo-Click-Element in seinem üblichen Anwendungsgebiet bei Erreichen des Temperaturschwellwerts den Stromkreis durch eine Motorwicklung. Temperaturfühler werden dagegen mittels einer Schutzschaltung ausgewertet, die im Wesentlichen den elektrischen Widerstand der betreffenden Temperaturdetektorelemente bestimmt, und ein Meldungssignal an einen Schalter, an eine Auswerteschaltung oder dergleichen ausgibt, wodurch z.B. ein Abschalten des Gerätes ausgelöst bzw. eine sonstige vorbestimmte Funktion gestartet wird, wenn abhängig von der gemessenen Temperatur eine thermische Überlast erkannt wird.

Derartige Schutzschaltungen sind häufig ebenfalls mit Kurzschlussdetektoren versehen, die ebenfalls eine Ausgabe des entsprechenden Meldungssignals bewirken und dadurch z.B. ein Abschalten des zu schützenden Gerätes auslösen, wenn im Fühlerstromkreis ein Kurzschluss auftritt. Ohne diese Kurzschlusserkennung kann bei einem Leiterkurzschluss eine thermische Überlast nicht mehr erkannt werden, da eine Widerstandserhöhung des Temperaturfühlers nicht mehr erkannt werden kann. Da zum Erlangen einer bestimmten Zulassung, z.B. ATEX (d.h. Gerät kann zum Schutz von Motoren in explosionsgefährdeten Bereichen eingesetzt werden), eine Kurzschlusserkennung erforderlich ist, ist der Einsatz einer solchen Schutzschaltung mit Kurzschlusserkennung wünschenswert. Eine solche Schaltung ist bekannt aus der WO2005/122354 A1.

Will man nun eine solche Schutzschaltung für Temperaturfühler der oben genannten Art, wie z. B. PTC-Thermistoren, PT100 Fühler und KTY-Fühler, als auch für Thermo-Click-Elemente verwenden, wird der geschlossene Zustand des Thermo-Click-Elementes im Normalzustand, d.h. bei Temperaturen im ersten Temperaturbereich, als Kurzschluss durch die Schutzschaltung erkannt, die daraufhin ein Abschalten des Geräts auslöst. Daher kann bislang eine Schutzschaltung, die für Temperaturfühler vorgesehen ist, nicht gleichzeitig in Verbindung mit einem Thermo-Click-Element verwendet werden.

Bislang sind lediglich Schutzschaltungen bekannt, die Temperaturfühler ohne Kurzschlusserkennung auswerten, die daher auch zur Auswertung von Thermo-Click-Elementen geeignet sind oder Schaltungen für Thermistoren, die eine Kurzschlusserkennung aufweisen und somit nicht zur Auswertung von Thermo-Click-Elementen geeignet sind. Außerdem sind bereits Auswerteschaltungen bekannt, bei denen es mit Hilfe von Einstellelementen oder Parametrierung möglich ist, zwischen einem Betrieb mit Kurzschlusserkennung und einem Betrieb ohne Kurzschlusserkennung zu wählen.

Eine Aufgabe der vorliegenden Erfindung ist es, eine Schutzschaltung zum Schutz eines Geräts vor einer thermischen Überlastung zur Verfügung zu stellen, bei der die Detektion einer thermischen Überlastung sowohl mit Temperaturfühlern als auch alternativ mit Thermo-Click-Elementen betrieben werden kann.

Diese Aufgabe wird durch die Schutzschaltung nach Anspruch 1 gelöst. Die Erfindung stellt eine Auswerteschaltung bereit, mit der es möglich ist, zwischen einem Betrieb mit Kurzschlusserkennung und einem Betrieb ohne Kurzschlusserkennung zu wählen, ohne dass hierfür zusätzliche Einstellelemente oder eine Parametrierung erforderlich sind.

Weitere vorteilhafte Ausgestaltungen der Erfindung sind in den abhängigen Ansprüchen angegeben.

Erfindungsgemäß ist eine Schutzschaltung zum Schutz eines Geräts, insbesondere eines Elektromotors, vor einer thermischen Überlastung vorgesehen. Die Schutzschaltung umfasst einen ersten und einen zweiten Anschluss zum Anschließen eines Temperaturdetektorelementes, eine Detektionseinheit zum Detektieren, ob sich ein Widerstandswert eines zwischen dem ersten und dem zweiten Anschluss angeschlossenen Temperaturdetektorelementes in einem ersten oder in einem zweiten Widerstandsbereich befindet und einen Kurzschlussdetektor zum Erkennen, ob ein Kurzschluss zwischen dem ersten und zweiten Anschluss vorliegt. Weiterhin sind Meldungsausgänge zum Ausgeben von Meldungssignalen an eine Auswerteeinheit vorgesehen, wenn sich der detektierte Widerstandswert im Widerstandsbereich befindet oder wenn ein Kurzschluss durch den Kurzschlussdetektor erkannt worden ist oder beides der Fall ist. Es ist weiterhin ein dritter Anschluss vorgesehen, der mit dem zweiten Anschluss über einen vorbestimmten Widerstand verbunden ist.

Die erfindungsgemäße Schutzschaltung ermöglicht es nun, sowohl Temperaturfühler als auch Thermo-Click-Elemente anzuschließen, so dass sowohl mit Temperaturfühlern als auch mit einem Thermo-Click-Element eine thermische Überlastung detektiert werden kann und trotzdem ein Kurzschluss zwischen dem ersten und zweiten Anschluss erkannt werden kann, selbst wenn ein Thermo-Click-Element mit der Schutzschaltung zur Temperaturdetektion verbunden ist. Es ist somit möglich, die Schutzschaltung entweder mit einem Temperaturfühler, deren elektrischer Widerstand von der detektierten Temperatur abhängt, oder mit einem Thermo-Click-Element zu betreiben. Weiterhin lässt sich durch einen von außen angelegten Kurzschluss zwischen dem ersten und dem dritten Anschluss ein Passivschaltung der Schutzschaltung erreichen, ohne sonstige Maßnahmen im Gesamtsystem vornehmen zu müssen.

Weiterhin kann der vorbestimmte Widerstand so gewählt sein, dass selbst bei einem Kurzschluss zwischen dem ersten und dem dritten Anschluss kein Kurzschluss durch den Kurzschlussdetektor erkannt wird. Auf diese Weise wird verhindert, dass das Thermo-Click-Element, wenn es an die Schutzschaltung angeschlossen wird, im Normalzustand, d.h. bei nicht detektierter Überlast, die Kurzschlusserkennung auslöst und die Ausgabe des Meldungssignals und dadurch z.B. ein Abschalten des Gerätes bewirkt.

Vorzugsweise liegt der vorbestimmte Widerstand in dem ersten Widerstandsbereich, der durch die Detektionseinheit als der Widerstandsbereich definiert ist, der einem Temperaturbereich entspricht, in dem keine Überlast aufgetreten ist.

Eine bevorzugte Ausführungsform der vorliegenden Erfindung wird nachfolgend anhand der beigefügten Zeichnungen näher erläutert.

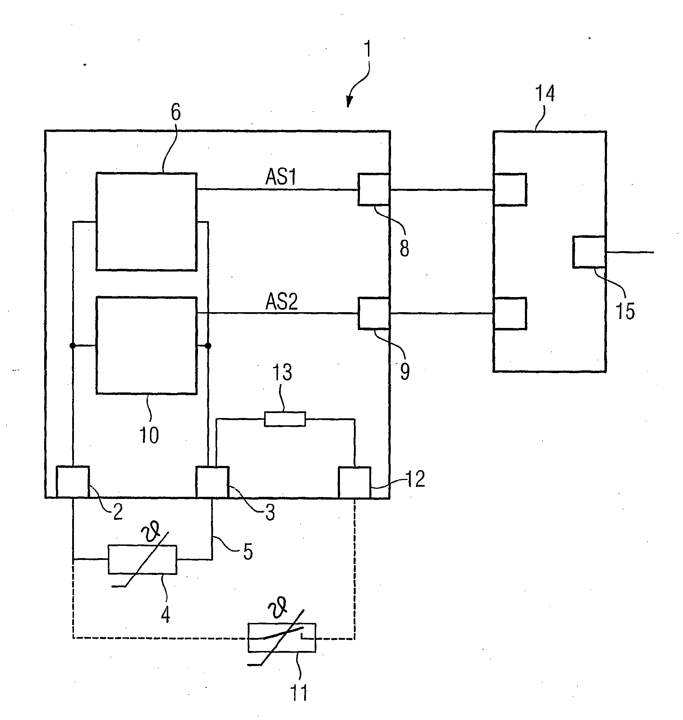

Die FIG 1 zeigt ein Blockschaltbild einer erfindungsgemäßen Schutzschaltung 1 mit einem ersten 2 und einem zweiten Anschluss 3, um als Temperaturdetektorelement einen Temperaturfühler, wie z. B. einen PTC Thermistor, einen PT100 Fühler, einen KTY-Fühler oder einen anderen Temperaturfühler anzuschließen, dessen elektrischer Widerstand abhängig von der detektierten Temperatur ist und insbesondere einen positiven Temperaturgradienten aufweist, d. h. der elektrische Widerstand nimmt mit steigender Temperatur zu.

Der Temperaturfühler 4 kann über Verbindungsleitungen 5 an dem ersten und zweiten Anschluss 2, 3 der Schutzschaltung 1 angeschlossen werden. Die Schutzschaltung 1 umfasst eine Detektionseinheit 6, die detektiert, ob sich ein Widerstandswert des zwischen dem ersten und dem zweiten Anschluss 2, 3 angeschlossenen Temperaturfühlers 4 in einem ersten oder in einem zweiten Widerstandsbereich befindet. Der erste Widerstandsbereich ist vorzugsweise ein Widerstandsbereich mit niedrigen Widerstandswerten und der zweite Widerstandsbereich ist vorzugsweise ein Bereich mit höheren Widerstandswerten, so dass die Detektionseinheit erkennt, ob sich die Temperatur an dem Temperaturfühler 4 in dem ersten oder in dem zweiten Temperaturbereich befindet.

Wird detektiert, dass sich der Widerstand des Temperaturfühlers 4 in dem ersten Widerstandsbereich befindet, so ist keine thermische Überlast aufgetreten, weil die Temperatur innerhalb des ersten Temperaturbereichs liegt, der unproblematisch ist. Befindet sich der Widerstandswert des Temperaturfühlers 4 in dem zweiten Widerstandsbereich, wird eine thermische Überlast detektiert und ein erstes Meldesignal AS1 über einen ersten Meldungsausgang 8 ausgegeben.

Weiterhin ist ein Kurzschlussdetektor 10 vorgesehen, der ebenfalls mit dem ersten und zweiten Anschluss der Schutzschaltung 1 verbunden ist und der detektiert, ob ein Kurzschluss zwischen dem ersten und zweiten Anschluss aufgetreten ist, d. h. ob der elektrische Widerstand zwischen dem ersten und zweiten Anschluss 2,3 0 Ohm oder nahezu 0 Ohm beträgt. Dadurch kann ein Kurzschluss zwischen den Verbindungsleitungen 5 zu dem Temperaturfühler 4 erkannt werden, und es wird abhängig davon ein zweites Meldesignal AS2 generiert, das an dem zweiten Meldungsausgang 9 ausgegeben wird. Beide Meldungsausgänge 8, 9 sind mit einer Auswerteeinheit 14 verbunden, die in Abhängigkeit von einer festen oder parametrierbaren Funktion über ihren Ausgang 15 z.B. eine Motorabschaltung veranlasst. Die Auswertereinheit 14 umfasst in einer einfachen Ausführung beispielsweise ein Oder-Gatter zur Verknüpfung der beiden Meldungssignale.

Wenn man nun statt des Temperaturfühlers 4 ein Thermo-Click-Element 11 verwenden will und dieses an den ersten und zweiten Anschluss 2, 3 der Schutzschaltung 1 anschließen würde, würde dies dazu führen, dass der Kurzschlussdetektor 10 einen Kurzschluss erkennt, da das Thermo-Click-Element 11 im Wesentlichen einen Schalter darstellt, der unterhalb eines Temperaturschwellwerts geschlossen ist. D.h. ist die Temperatur, die durch das Thermo-Click-Element 11 detektiert wird, unterhalb eines vorbestimmten Temperaturschwellwerts, so weist das Thermo-Click-Element 11 so gut wie keinen Ohmschen Widerstand auf, was fälschlicherweise bei Anschluss an den ersten und zweiten Anschluss 2, 3 der Schutzschaltung 1 als Kurzschluss detektiert werden würde.

Um es der Schutzschaltung 1 zu ermöglichen, auch mit Thermo-Click-Elementen betrieben zu werden, ist ein dritter Anschluss 12 vorgesehen, der mit dem zweiten Anschluss über ein Widerstandselement 13 verbunden ist, das einem vorbestimmten Widerstandswert aufweist. Es ist nun vorgesehen, dass die Schutzschaltung 1 bei der Verwendung eines Thermo-Click-Elementes 11 als Temperaturdetektorelement dieses zwischen dem ersten und dem dritten Anschluss 2, 12 angeschlossen wird. In diesem Fall ist das Thermo-Click-Element 11 mit dem Widerstandselement 13 in Reihe geschaltet, so dass selbst in geschlossenem Zustand des Thermo-Click-Elementes 11 der Kurzschlussdetektor 10 keinen Kurzschluss detektieren kann.

Wird der Temperaturschwellwert überschritten, so öffnet sich das Thermo-Click-Element 11 und die Verbindung zwischen dem ersten Anschluss und dem dritten Anschluss, d. h. zwischen dem ersten und dem zweiten Anschluss ist unterbrochen. Es wird ein sehr hoher Widerstand detektiert, der wie oben beschrieben im zweiten Widerstandsbereich liegt, so dass die Detektionseinheit 6 eine thermische Überlast erkennt und ein entsprechendes Meldesignal AS1 an den Meldungsausgang 8 ausgibt.

Weiterhin ist es möglich, die Schutzschaltung 1 auch vollständig zu deaktivieren, indem eine Drahtbrücke zwischen dem ersten Anschluss und dem dritten Anschluss angeschlossen wird, was bei herkömmlichen Schutzschaltungen aufgrund der Kurzschlusserkennung nicht möglich wäre, da diese sofort die Ausgabe des Meldungssignals bewirken würde. Somit kann auf ein zusätzliches Schaltelement innerhalb der Schutzschaltung 1 verzichtet werden, mit dem die Schutzschaltung 1 deaktiviert werden kann, wenn kein Temperaturdetektorelement zum Detektieren einer thermischen Überlast verwendet werden soll.

Der Widerstandswert des Widerstandselementes 13 ist vorzugsweise so gewählt, dass sich der Widerstandswert innerhalb des ersten Widerstandsbereiches befindet, so dass die Schutzschaltung 1 bei einem geschlossenen Thermo-Click-Element 11 einen Widerstandswert detektiert, der angibt, dass keine thermische Überlast aufgetreten ist. Zum Beispiel kann der vorbestimmte Widerstandswert des Widerstandselementes 13 dem Widerstandswert eines verwendbaren Temperaturfühlers 4 bei Raumtemperatur entsprechen (vorausgesetzt, dass bei Raumtemperatur nicht der Fall einer thermischen Überlast gegeben ist).

Auf diese Weise lässt sich eine Schutzschaltung 1 zur Verfügung stellen, die geeignet ist entweder mit einem Temperaturfühler, dessen Widerstandswert von der Temperatur abhängt, oder mit einem Thermo-Click-Element, d. h. einem Temperaturschalter betrieben zu werden und bei dem weiterhin auch eine Kurzschlusserkennung bei Verwendung eines Temperaturfühlers möglich ist, um den vorgegebenen Anforderungen, z.B. denen einer ATEX Zulassung, zu genügen.

## Patentansprüche

1. Schutzschaltung (1) zum Schutz eines Geräts, insbesondere eines Elektromotors, vor einer thermischen Überlastung umfassend:
- einen ersten und eines zweiten Anschluss (2, 3) zum Anschließen eines Temperaturdetektorelementes (4, 11);
- eine Detektionseinheit (6) zum Detektieren, ob sich ein Widerstandswert des zwischen dem ersten und dem zweiten Anschluss (2, 3) angeschlossenen Temperaturdetektorelementes (4, 11) in einem ersten oder in einem zweiten Widerstandsbereich befindet;
- einen Kurzschlussdetektor (10) zum Erkennen, ob ein Kurzschluss zwischen dem ersten und zweiten Anschluss (2, 3) vorliegt;
- Meldungsausgänge (8, 9) zum Ausgeben von Meldungssignalen an eine Auswerteeinheit (14), wenn sich der detektierte Widerstandswert in dem zweiten Widerstandsbereich befindet und/oder wenn ein Kurzschluss durch den Kurzschlussdetektor (10) erkannt worden ist;
- einen dritten Anschluss (12), der mit dem zweiten Anschluss (2) über einen vorbestimmten Widerstand (13) verbunden ist.

2. Schutzschaltung (1) nach Anspruch 1, wobei der vorbestimmte Widerstand (13) so gewählt ist, dass selbst bei einem Kurzschluss zwischen dem ersten und dem dritten Anschluss (12) kein Kurzschluss durch den Kurzschlussdetektor (10) erkannt wird.

3. Schutzschaltung nach Anspruch 1, wobei der vorbestimmte Widerstand in dem ersten Widerstandsbereich liegt.

4. Schutzschaltung nach Anspruch 1 oder 2, wobei die Widerstandswerte des ersten Widerstandsbereichs kleiner sind als die Widerstandswerte des zweiten Widerstandsbereichs.

## Claims

1. Protective circuit (1) for protection of an appliance, in particular an electric motor, against thermal overloading, comprising:
- a first and a second connection (2, 3) for connection of a temperature detector element (4, 11);
- a detection unit (6) for detection of whether a resistance value of the temperature detector element (4, 11) which is connected between the first and the second connection (2, 3) is in a first or a second resistance range;
- a short-circuit detector (10) for detection of whether a short circuit is present between the first and the second connection (2, 3);
- signaling outputs (8, 9) for emission of message signals to an evaluation unit (14) when the detected resistance value is in the second resistance range and/or when a short circuit has been identified by the short-circuit detector (10);
- a third connection (12), which is connected to the second connection (2) via a predetermined resistance (13).

2. Protective circuit (1) according to Claim 1, wherein the predetermined resistance (13) is chosen such that the short-circuit detector (10) does not identify a short circuit even when there is a short circuit between the first and the third connection (12).

3. Protective circuit according to Claim 1, wherein the predetermined resistance is in the first resistance range.

4. Protective circuit according to Claim 1 or 2, wherein the resistance values in the first resistance range are lower than the resistance values in the second resistance range.

## Revendications

1. Circuit (1) de protection d'un appareil, notamment d'un moteur électrique vis-à-vis d'une surcharge thermique, comprenant :
- une première et une deuxième bornes (2, 3) de connexion d'un élément (4, 11) formant détecteur de température,
- une unité (6) de détection pour détecter si une valeur de la résistance de l'élément (4, 11) formant détecteur de température monté entre la première et la deuxième borne (2, 3) se trouve dans une première plage ou une deuxièmes plage de résistance,
- un détecteur (10) de court-circuit pour reconnaître s'il y a un court-circuit entre la première et la deuxième bornes (2, 3),
- des sorties (8, 9) d'avertissement pour émettre des signaux d'avertissement vers une unité (14) d'exploitation si la valeur de résistance détectée se trouve dans la deuxième plage de résistance et/ou si un court-circuit a été reconnu par le détecteur (10) de court-circuit,
- une troisième borne (12) qui est reliée à la deuxième borne (2) par une résistance (13) déterminée à l'avance.

2. Circuit (1) de protection suivant la revendication 1, dans lequel la résistance (13) déterminée à l'avance est choisie de manière à ce que, même s'il y a un court-circuit entre la première et la troisième bornes (12), un court-circuit n'est pas détecté par le détecteur (10) de court-circuit.

3. Circuit (1) de protection suivant la revendication 1, dans lequel la résistance déterminée à l'avance se trouve dans sa première plage de résistance.

4. Circuit (1) de protection suivant la revendication 1 ou 2, dans lequel les valeurs de résistance de la première plage de résistance sont plus petites que les valeurs de résistance de la deuxième plage de résistance.
